# EUROPEAN PATENT APPLICATION

(11) **EP 2 848 582 A1**
(43) Date of publication of application: **18.03.2015**
(21) Application number: 13184164.5
(22) Date of filing: 12.09.2013
(51) Int. Cl.: B67D 1/12, F16K 15/18

(54) **A safety relief valve**

(71) Applicant: Micro Matic A/S, 5250 Odense SV (DK)
(72) Inventor: Dahl, Benny, 5260 Odense S (DK); Laugesen, Morten, 5250 Odense SV (DK)
(74) Representative: Hoffmann Dragsted A/S

(57) **Abstract**

The present invention relates to a safety relief valve (1) for a beverage dispensing system (100), comprising a valve housing (3) having a first end (11) and a second end (12) and an inflow opening (13) at the second end and a relief opening (4) arranged in the housing (3), a piston (6) movably arranged in the housing (3), a spring (14) arranged in the housing and adapted to press the piston (6) towards the second end (12) for closing a fluid communication between the inflow opening (13) and the relief opening (4), wherein the piston (6) comprises a first piston part (17)and a second piston part (18), the spring (14) abuts the second part (18), and the second piston part (18) is slidably connected with the first piston part (17). The present invention also relates to a pressure regulator (40) for a beverage dispensing system (100), to a dispense head (43) for a beverage dispensing system (100) and to beverage dispensing system (100).

## Description

### Field of the invention

The present invention relates to a safety relief valve for a beverage dispensing system, a pressure regulator for a beverage dispensing system, a dispense head for a beverage dispensing system and beverage dispensing system.

### Background art

In connection with beverage dispensing systems using a gas, for instance CO2, as propelling means for enabling dispensing of the beverage from a beverage container to the consumer, it is a statutory requirement that a safety valve is incorporated in the system to ensure that a gas pressure may be relieved when it exceeds a predetermined level.

Furthermore, gas regulators are often arranged in the system so that the user is able to regulate the gas pressure. Often it is necessary to manually ventilate the regulator to ensure that the pressure measured by the regulator is correct. This manual ventilation function may be incorporated in the safety relief valve. However, in certain situations the user blocks the manual ventilation, whereby safety is compromised, as a higher pressure may be achieved by this blockage than may be achieved by the statutory safety valve.

### Summary of the invention

It is an object of the present invention to wholly or partly overcome the above disadvantages and drawbacks of the prior art. More specifically, it is an object to provide an improved safety relief valve maintaining its capability of relieving a gas pressure when it reaches a predetermined level.

The above objects, together with numerous other objects, advantages and features, which will become evident from the below description, are accomplished by a solution in accordance with the present invention by a safety relief valve for a beverage dispensing system, comprising
- a valve housing having a first end and a second end and an inflow opening at the second end and a relief opening arranged in the housing,
- a piston movably arranged in the housing,
- a spring arranged in the housing and adapted to press the piston towards the second end for closing a fluid communication between the inflow opening and the relief opening,
wherein the piston comprises a first piston part and a second piston part, the spring abuts the second part, and the second piston part is slidably connected with the first piston part.

The first piston part may comprise a first engagement means and the second piston part may comprise second engagement means engaging the first engagement means to ensure that when the first piston part is moved in a first direction towards the first end, the first piston part moves the second piston part.

Moreover, the first piston part may slide in relation to the second piston part when moving in a second direction opposite the first direction, and the second piston part may slide in relation to the first piston part when moving in the first direction.

Furthermore, the second piston part may be hollow and the first piston part may be adapted to be moved within the second piston part, or the first piston part may be hollow and the first piston part may be adapted to be moved outside the second piston part.

Also, the first piston part may comprise a first piston part end and a second piston part end, the first engagement means being arranged at the second piston part end, and the second piston part may comprise a first piston part end and a second piston part end, the second engagement means being arranged at the first piston part end, so that when the first piston part is moved in the first direction, the first piston part moves the second piston part when the first engagement means engage the second engagement means.

Additionally, the second piston part end of the first piston part may overlap the first piston part end of the second piston part.

Further, the first engagement means may project radially outwards from the first piston part and the second engagement means may project radially inwards from the second piston part, or vice versa.

Moreover, the first piston part may be out of contact with the spring.

Also, the spring may be extending from the first end of the housing towards the second end and may abut the second piston part at the second piston part end of the second piston part.

The spring may be a helical spring circumferenting the piston.

Said spring may further comprise adjustment means arranged at the first end of the housing, the adjustment means being adapted to a spring power of the spring.

In addition, the housing may comprise a piston opening at the first end, whereby the first piston part projects from the housing in the first end and comprises a radially through-going hole arranged outside the housing.

Furthermore, a pulling means and/or sealing means may be arranged in the hole.

Moreover, a lever means may be arranged in connection with the section of the first piston part projecting from the housing, enabling the first piston part to be moved further out of the housing, whereby when the first piston part is moved in the first direction towards the first end, the first piston part moves the second piston part.

Also, a lid may be arranged on the first end of the housing.

Said lid may comprise identification means visible from an outside of the safety relief valve.

Further, the identification means may be a colour.

The present invention also relates to a pressure regulator for a beverage dispensing system comprising a safety relief valve as described above. Moreover, the present invention relates to a dispense head for a beverage dispensing system comprising a safety relief valve as described above.

Finally, the present invention also relates to a beverage dispensing system comprising:
- a beverage container,
- a gas cylinder having a pressurised gas such as CO2, the gas cylinder being in fluid communication with the beverage container via a pressure regulator and a dispense head mounted on the beverage container,
wherein the pressure regulator and/or the dispense head comprises a safety relief valve as described above.

### Brief description of the drawings

The invention and its many advantages will be described in more detail below with reference to the accompanying schematic drawings, which for the purpose of illustration show some non-limiting embodiments and in which
Fig. 1 shows an embodiment of a safety relief valve according to the present invention,
Fig. 2 is a cross-sectional view of the safety relief valve shown in Fig. 1,
Fig. 3 shows another embodiment of a safety relief valve in a cross-sectional view,
Fig. 4 shows an additional embodiment of a safety relief valve in a cross-sectional view,
Fig. 5 shows a gas pressure regulator with a safety relief valve, and
Fig. 6 shows a beverage dispensing system.

All the figures are highly schematic and not necessarily to scale, and they show only those parts which are necessary in order to elucidate the invention, other parts being omitted or merely suggested.

### Detailed description of the invention

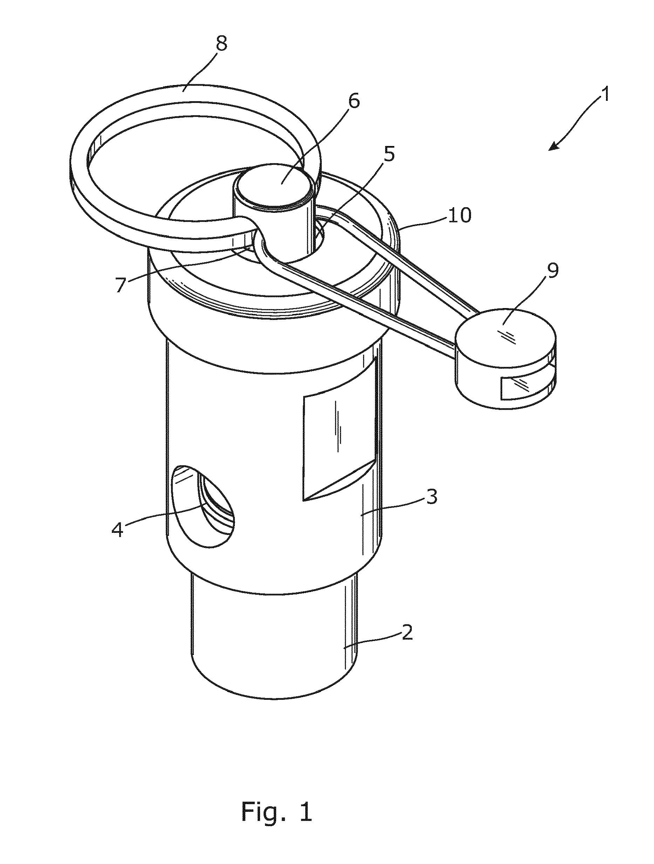

Fig. 1 shows a safety relief valve 1 in a perspective view. In this embodiment, the safety relief valve 1 is adapted to be screwed into an opening of a gas pressure regulator (not shown) or a dispense head (not shown). The safety relief valve 1 comprises a threaded area 2 which is adapted to be screwed into corresponding means. The safety relief valve 1 comprises a valve housing 3 having a relief opening 4 arranged in the wall of the housing 3.

Furthermore, the housing 3 comprises a piston opening 5 so that the piston 6 may project out of said piston opening 5. The part of the piston 6 being outside the housing 3 comprises a radially through-going hole 7. In this hole 7, a pulling means 8 such as a ring and/or sealing means 9 are arranged. The pulling means 8 may assist the user in manually ventilating the safety relief valve to ensure that for instance the gas pressure regulator measures a correct gas pressure. The sealing means 9 ensures that it is visible if a user has separated and perhaps tampered with the safety relief valve 1 so that it might do not fulfill the statutory requirements.

The safety relief valve 1 also comprises a lid 10 or cover being arranged at an end of the housing 3. The lid 10 protects the interior of the safety relief valve 1. However, it may also comprise identification means visible from an outside of the safety relief valve. The identification means may be used to easily identify which type of safety relief valve is in use. Advantageously, the identification means is a colour. The identification means, such as a colour, may also be used as an identification of the manufacturer and supplier of the safety relief valve 1.

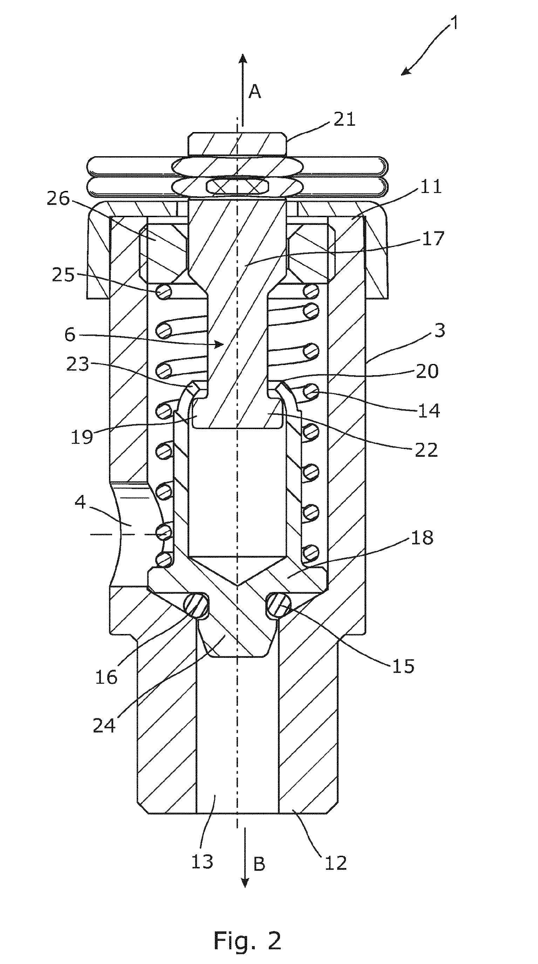

Fig. 2 shows an embodiment of the safety relief valve 1 in a cross-sectional view. The safety relief valve 1 comprises the valve housing 3 having a first end 11 and a second end 12 and an inflow opening 13 at the second end 12 and a relief opening 4 arranged in the housing. A piston 6 is movably arranged in the housing 3 and a spring 14 is arranged in the housing 3 and adapted to press the piston 6 towards the second end 12 in order to close a fluid communication between the inflow opening 13 and the relief opening 4. In this embodiment, the piston abuts a valve seat 15 arranged at a distance from the inflow opening 13. The piston 6 may also comprise sealing means 16 for assisting in the sealing of the piston in relation to the valve seat 15. Furthermore, the piston 6 comprises a first piston part 17 and a second piston part 18, the spring 14 abuts the second piston part 18, and the second piston part 18 is slidably connected with the first piston part 17. Hereby it is obtained that the first and second piston parts 17, 18 may slide substantially independently in relation to each other, whereby the function, and thereby safety, of the safety relief valve is maintained since it is difficult to tamper with the safety relief valve.

Furthermore, the first piston part 17 comprises a first engagement means 19 and the second piston part 18 comprises second engagement means 20 engaging the first engagement means 19 to ensure that when the first piston part 17 is moved in a first direction A towards the first end 11, the first piston part 17 moves the second piston part 18. Thus, when the user will ventilate for instance a gas pressure regulator, he/she may pull in the first piston part, whereby the second piston part will be moved in the same pulling direction, whereby the inflow opening will come into fluid communication with the relief opening, so that ventilation occurs. In the present embodiment, the first engagement means 19 projects radially outwards from the first piston part 17 and the second engagement means 20 projects radially inwards from the second piston part 18, so that the first and second engagement means overlap each other and thereby engage each other. In the present embodiment, the first engagement means 19 is arranged closer to the second end 12 of the housing 3 than the second engagement means 20. Moreover, the first piston part 17 is out of contact with the spring 14.

The first piston part 17 slides in relation to the second piston part 18 when moving in a second direction B opposite the first direction A, and the second piston part 18 slides in relation to the first piston part 17 when moving in the first direction A. The second piston part 18 is hollow, and the first piston part 17 is adapted to be moved within the second piston part 18. Hereby it is obtained that if the pressure in connection with the inflow opening exceeds a predetermined level, i.e. the spring force exerted on the second piston part, the second piston part is moved in the first direction A so that fluid communication between the inflow opening and the relief opening is provided, whereby the pressure is relieved. In this circumstance, the second piston part is moved independently of the first piston part. Furthermore, if the user for instance will block the piston in order to disable the safety function of the safety relief valve by pressing the piston down towards the inflow opening, the first piston part will just be slid in the second direction B independently of the second piston part, whereby the safety of the safety relief valve is maintained.

Furthermore, the first piston part 17 comprises a first piston part end 21 and a second piston part end 22, the first engagement means 19 being arranged at the second piston part end 22, and the second piston part 18 comprises a first piston part end 23 and a second piston part end 24, the second engagement means 20 being arranged at the first piston part end 23 so that when the first piston part 17 is moved in the first direction A, the first piston part moves the second piston part when the first engagement means engage the second engagement means.

The spring 14 is extending from the first end 11 of the housing 3 towards the second end 12 and abuts the second piston part 18 at the second piston part end 24 of the second piston part 18. The spring 14 abuts a face 25 of a ring-shaped disc 26 arranged at the first end 11 of the housing 3. The first piston part 17 is slidable within the ring-shaped disc 26. In this embodiment, the disc 26 is connected to the housing 3. The spring 14 is preferably a helical spring circumferenting the first and second piston parts.

In this embodiment, it is the first piston part which projects from the housing in the first end and comprises a radially through-going hole arranged outside the housing.

In a not shown embodiment, the safety relief valve may comprise adjustment means arranged at the first end of the housing, the adjustment means being adapted to adjust a spring power of the spring, so that the predetermined safety level, i.e. at which pressure the safety relief valve is to relieve the pressure, may be set in relation to the circumstances.

Furthermore, a lever means (not shown) may be arranged in connection with the section of the first piston part projecting from the housing, enabling the first piston part to be moved further out of the housing, whereby when the first piston part is moved in the first direction towards the first end, the first piston part moves the second piston part.

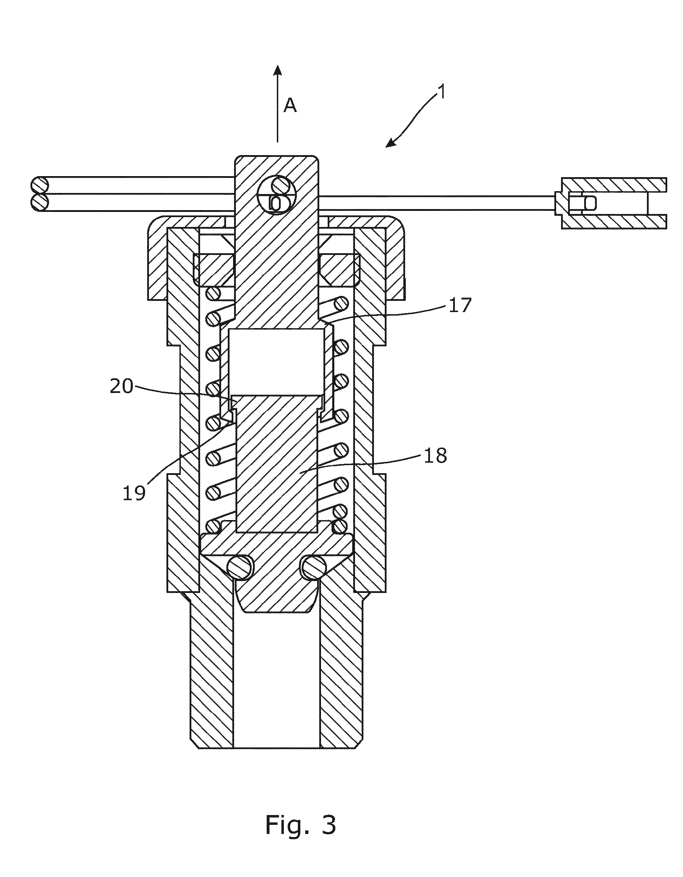

In Fig. 3, another embodiment of a safety relief valve 1 is shown in a cross-sectional view. The safety relief valve 1 has substantially the same design and function as described above in connection with Fig. 2. However, in the present embodiment, the first piston part 17 is partly hollow and the first piston part 17 is adapted to be moved outside the second piston part 18. In the present embodiment, the first engagement means 19 projects radially inwards from the first piston part 17, and the second engagement means 20 projects radially outwards from the second piston part 18, so that the first and second engagement means overlap each other and thereby may engage each other when the first piston part 17 is moved in the first direction A.

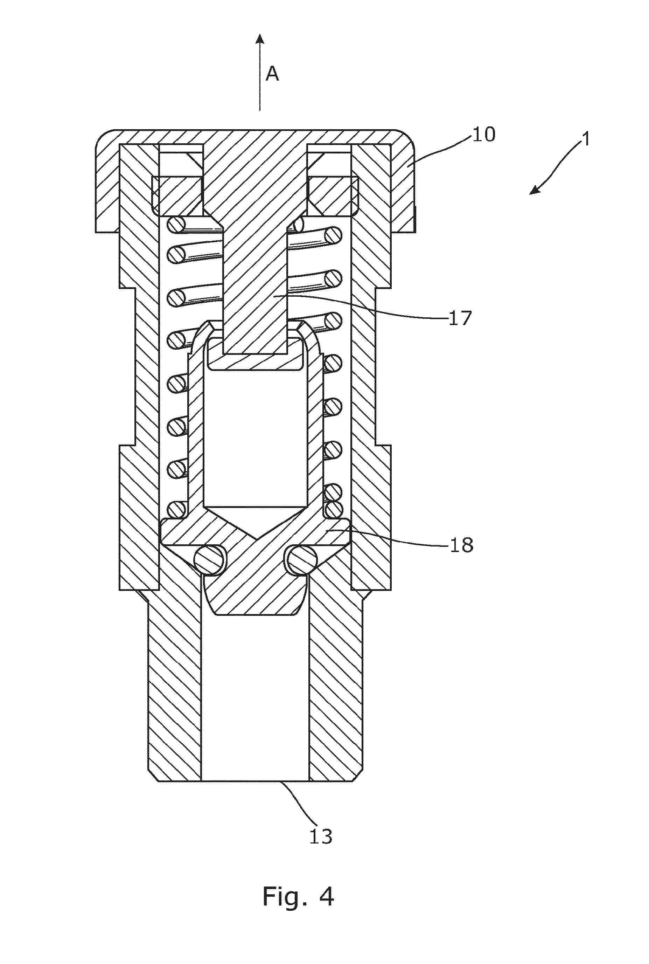

In Fig. 4, an additional embodiment of the safety relief valve 1 is shown in a cross-sectional view. The safety relief valve 1 has substantially the same design and function as the one described in Fig.2. However, in this embodiment, the first piston part 17 is connected with the lid 10. So when the safety relief valve 1 of Fig. 4 is to be ventilated, the lid 10 is lifted, whereby the first piston part 17 will be moved in the first direction A, and the second piston part 18 will consequently be moved in the same direction so that fluid communication between the inflow opening 13 and the relief opening (not shown) is provided for ventilation.

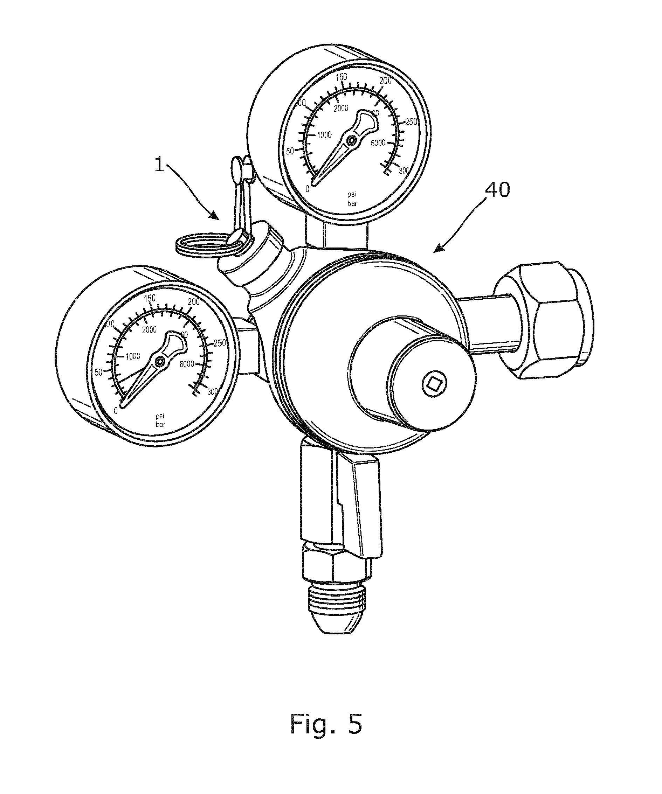

In Fig. 5, a gas pressure regulator 40 for a beverage dispensing system is shown. The gas pressure regulator comprises the safety relief valve 1 as described above.

In another not shown embodiment, the safety relief valve may be arranged in a dispense head for a beverage dispensing system.

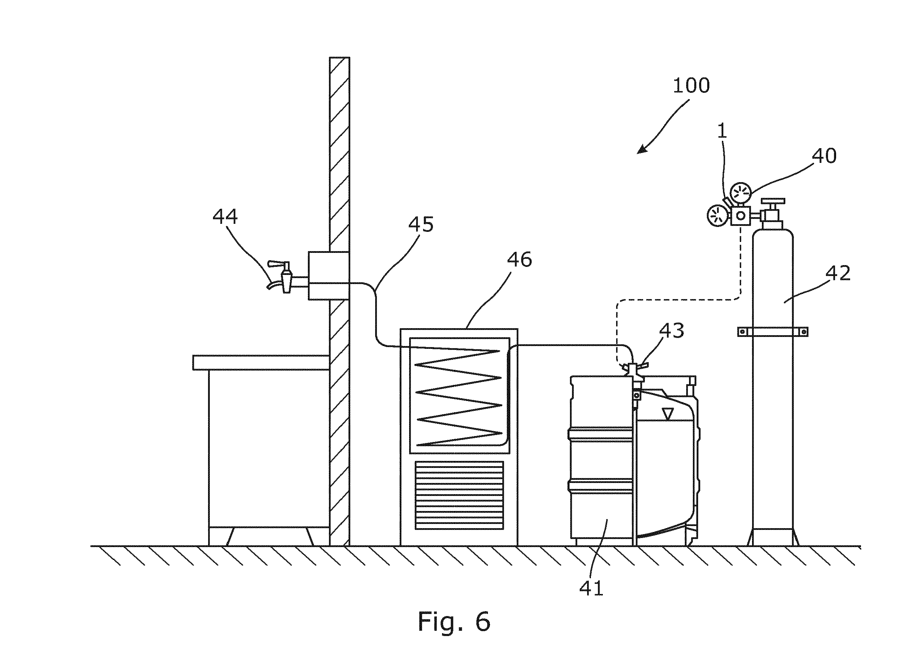

Fig. 6 shows a beverage dispensing system 100. The beverage dispensing system 100 comprises a beverage container 41, such as a keg. The beverage container 41 comprises the extractor tube assembly arranged in an opening (not shown) of the beverage container 41. The beverage dispensing system 100 also comprises a gas supply 42. The gas supply 42 may for instance be a CO2 cylinder and may be connected to a dispense head 43.

A dispensing tap 44 is connected to the dispense head 43 via a dispensing line 45. In this embodiment, a cooling device 46 is arranged between the dispensing tap 44 and the dispense head 43 to cool the beverage before dispensing.

During operation of the beverage dispensing system 100, the gas supply 42 supplies pressurised gas, such as CO2 or other suitable gasses, via the gas pressure regulator 40 having the safety relief valve 1 according to the present invention to the dispense head 43 and then to the top of the beverage container 41 in order to displace the beverage. When the dispensing tap 44 is opened, the CO2 will start displacing the beverage from the top of the beverage container 41, causing the beverage at the bottom of the beverage container 41 to flow via the extractor tube assembly into a flow channel in the dispense head 43 and further into the dispensing line 45.

Although the invention has been described in the above in connection with preferred embodiments of the invention, it will be evident for a person skilled in the art that several modifications are conceivable without departing from the invention as defined by the following claims.

## Claims

1. A safety relief (1) valve for a beverage dispensing system (100), comprising:
- a valve housing (3) having a first end (11) and a second end (12) and an inflow opening (13) at the second end and a relief opening (4) arranged in the housing,
- a piston (6) movably arranged in the housing,
- a spring (14) arranged in the housing and adapted to press the piston towards the second end for closing a fluid communication between the inflow opening and the relief opening,
wherein the piston comprises a first piston part (17) and a second piston part (18), the spring abuts the second part, and the second piston part is slidably connected with the first piston part.

2. A safety relief valve according to claim 1, wherein the first piston part comprises a first engagement means (19) and the second piston part comprises second engagement means (20) engaging the first engagement means to ensure that when the first piston part is moved in a first direction towards the first end, the first piston part moves the second piston part.

3. A safety relief valve according to claim 2, wherein the first piston part slides in relation to the second piston part when moving in a second direction opposite the first direction, and the second piston part slides in relation to the first piston part when moving in the first direction.

4. A safety relief valve according to any of the preceding claims, wherein the second piston part is hollow and the first piston part is adapted to be moved within the second piston part, or the first piston part is hollow and the first piston part is adapted to be moved outside the second piston part.

5. A safety relief valve according to claim 2, wherein the first piston part comprises a first piston part end (21) and a second piston part end (22), the first engagement means being arranged at the second piston part end, and the second piston part comprises a first piston part end (23) and a second piston part end (24), the second engagement means being arranged at the first piston part end, so that when the first piston part is moved in the first direction, the first piston part moves the second piston part when the first engagement means engage the second engagement means.

6. A safety relief valve according to any of the claims 2-5, wherein the first engagement means projects radially outwards from the first piston part and the second engagement means projects radially inwards from the second piston part, or vice versa.

7. A safety relief valve according to any of the claims 2-6, wherein the first piston part is out of contact with the spring.

8. A safety relief valve according to any of the claims 2-7, wherein the spring is extending from the first end of the housing towards the second end and abuts the second piston part at the second piston part end of the second piston part.

9. A safety relief valve according to any of the preceding claims 2-8, wherein the housing comprises a piston opening (5) at the first end, whereby the first piston part projects from the housing in the first end and comprises a radially through-going hole (7) arranged outside the housing.

10. A safety relief valve according to claim 9, wherein a pulling means (8) and/or sealing means (9) are arranged in the hole.

11. A safety relief valve according to any of the preceding claims, wherein a lid (10) is arranged on the first end of the housing.

12. A pressure regulator for a beverage dispensing system comprising a safety relief valve according to any of the preceding claims.

13. A dispense head (43) for a beverage dispensing system comprising a safety relief valve according to any of the claims 1-11.

14. A beverage dispensing system (100) comprising:
- a beverage container (41),
- a gas cylinder having a pressurised gas such as CO2, the gas cylinder being in fluid communication with the beverage container via a pressure regulator and a dispense head mounted on the beverage container,
wherein the pressure regulator and/or the dispense head comprises a safety relief valve according to any of the claims 1-12.
